# EUROPÄISCHE PATENTSCHRIFT

(11) **EP 0 642 435 B1**
(45) Veröffentlichungstag und Bekanntmachung des Hinweises auf die Patenterteilung: **02.01.1997**
(21) Anmeldenummer: 93909973.5
(22) Anmeldetag: 12.05.1993
(51) Int. Cl.: B60T 13/66, B60T 8/00, B60T 8/44

(54) **VERFAHREN ZUM REGELN EINES BREMSDRUCKES MIT EINEM BREMSKRAFTVERSTÄRKER**
PROCESS FOR REGULATING THE BRAKING PRESSURE USING A BRAKE SERVO
PROCEDE DE REGULATION DE LA PRESSION DE FREINAGE AU MOYEN D'UN SYSTEME SERVO

(30) Priorität: 26.05.1992 DE 4217409
(43) Veröffentlichungstag der Anmeldung: 15.03.1995
(73) Patentinhaber: LUCAS INDUSTRIES PUBLIC LIMITED COMPANY, Solihull, West Midlands B91 3TX (GB)
(72) Erfinder: MICHELS, Erwin, D-5593 Kail (DE)
(74) Vertreter: von Hellfeld, Axel, Dr. Dipl.-Phys.
(86) Internationale Anmeldenummer: EP9301187
(87) Internationale Veröffentlichungsnummer: WO9324353

(56) Entgegenhaltungen:
- EP-A- 0 485 367
- DE-A- 2 249 007
- DE-A- 3 444 827
- DE-A- 4 004 065
- DE-C- 4 028 290
- DE-C- 4 102 497
- FR-A- 2 574 355
- PATENT ABSTRACTS OF JAPAN vol. 10, no. 304 (M-526)(2360) 16. Oktober 1986

## Beschreibung

Die Erfindung betrifft ein Verfahren zum Regeln des Bremsdruckes in einer mit einem elektronisch steuerbaren Bremskraftverstärker ausgerüsteten Fahrzeugbremsanlage, bei dem eine Betätigungsgeschwindigkeit des Bremspedals ermittelt und in Abhängigkeit davon eine Bremskraftverstärkung durchgeführt wird.

Ein solches Verfahren ist aus der DE 40 28 290 C1 bekannt. Dort ist vorgesehen, in kritischen Fahrsituationen (insbesondere bei sogenannten Panikbremsungen) den Bremsweg eines Kraftfahrzeuges dadurch zu verkürzen, daß die Betätigungsgeschwindigkeit des Bremspedals als Kriterium für das Auslösen eines automatischen Bremsvorganges herangezogen wird. Dazu wird ein als solches bekannter Bremskraftverstärker eingesetzt, der an den Fahrzeugbremsen Bremsdrucke erzeugt, die nicht mehr allein bestimmt sind durch die vom Fahrer des Fahrzeuges am Pedal erzeugte Kraft, sondern durch andere Kriterien, insbesondere einen Vergleich der Betätigungsgeschwindigkeit des Bremspedals mit einem Schwellwert. Überschreitet die Betätigungsgeschwindigkeit des Bremspedals einen Schwellwert, so wird der Bremsvorgang automatisch ausgelöst und es wird ein Bremsdruck aufgebaut, der größer ist als derjenige, der sich allein aus der Stellung des Bremspedals ergeben würde.

Bei diesem Stand der Technik wird der Bremsdruck an den einzelnen Fahrzeugbremsen nicht geregelt, sondern vielmehr gesteuert. In Abhängigkeit von der Betätigungsgeschwindigkeit des Bremspedals wird ein erhöhter Bremsdruck derart aufgebaut, daß (bei Überschreiten des oben erwähnten Schwellwertes) zu dem Bremsdruck, der sich aus der momentanen Pedalstellung des Bremspedals ergibt, ein zusätzlicher Bremsdruck erzeugt wird, der z.B. proportional sein kann zur maximal aufgetretenen Betätigungsgeschwindigkeit des Bremspedals.

Die Technik, gemäß der an Fahrzeugbremsen zusätzlich zu dem mit dem Hauptbremszylinder einer Bremsanlage erzeugten Hydraulikdruck willkürliche oder automatisch gesteuerte erhöhte Druckwerte einstellbar sind, ist dem Fachmann bekannt. So beschreibt z.B. die DE 39 43 002 A1 eine Fahrzeugbremsanlage mit einem Bremskraftverstärker, bei dem zusätzlich zum üblichen mechanischen Betätigungsventil des Bremskraftverstärkers ein weiteres, elektrisch gesteuertes Ventil vorgesehen ist, um in Abhängigkeit von mittels einer Datenverarbeitungsanlage erzeugten Steuersignalen eine Einstellung des Bremskraftverstärkers (und damit der Bremskraft) vorzunehmen. Auch das DE-GM 92 02 154 beschreibt einen elektronisch einstellbaren Bremskraftverstärker.

Der oben genannte Stand der Technik wird nachfolgend als bekannt vorausgesetzt, insbesondere wird die Technik der Bremskraftverstärker und deren elektronische Steuerung, z.B. mit elektronisch gesteuerten Ventilen, als bekannt vorausgesetzt.

Gemäß dem Stand der Technik sind also insbesondere Einrichtungen als bekannt vorauszusetzen, mit denen Bremskraftverstärker, z.B. mit einer Druckdifferenz arbeitende Bremskraftverstärker, über ein zusätzliches elektromagnetisch betätigbares Steuerventil so steuerbar sind, daß eine Bremskraftverstärkung durchgeführt wird, die sich von der rein mechanisch eingestellten Bremskraftverstärkung unterscheidet, und zwar entsprechend den elektronischen Steuerbefehlen für das elektromagnetisch betätigbare Steuerventil des Bremskraftverstärkers.

Eine ideale Bremskraftregelung unter Verwendung eines Bremskraftverstärkers könnte darin bestehen, einerseits die vom Fahrer des Fahrzeuges am Bremspedal erzeugte Kraft zu messen und mit Hilfe dieser Kraft gemäß einer vorgegebenen Funktion ein Steuersignal für den Bremskraftverstärker abzuleiten und entsprechend Bremsdruck an den zu bremsenden Rädern zu erzeugen (ggf. unter den Bedingungen einer Antiblockierregelung). Es ist allerdings sehr aufwendig, am Hauptbremszylinder einer Bremsanlage zusätzlich einen Kraftsensor anzubringen.

Untersuchungen des Verhaltens von Kraftfahrern haben ergeben, daß in kritischen Fahrsituationen (insbesondere sogenannten Panikbremsungen) häufig ein unbewußtes Fehlverhalten auftritt. Sehr häufig wird in der Anfangsphase einer Bremsung das Bremspedal zwar ausreichend schnell betätigt, jedoch scheuen sich viele Fahrer, das Pedal mit der möglichen Kraft durchzudrücken. Dies gilt auch für Fahrzeuge, die mit einer Blockierschutzanlage (ABS) ausgerüstet sind. Ein derartiges, nicht optimales Bremsverhalten tritt bei einer Vielzahl von Autofahrern aus folgenden Gründen auf: In der Anfangsphase einer Bremsung wird dem Bremspedal noch eine relativ geringe hydraulische Reaktionskraft (Gegenkraft) entgegengesetzt. Eine derartige hydraulische Reaktionskraft wird erst durch den Druckanstieg in der Bremsanlage erzeugt. Somit erhöht der Fahrer zu Beginn eines Bremsvorganges ohne weiteres die Betätigungsgeschwindigkeit. Im Verlaufe des weiteren Pedalweges verstärkt sich aber sehr schnell die Reaktionskraft und deshalb kann man bei einer Vielzahl von Fahrern beobachten, daß die Pedalgeschwindigkeit nach einem Maximum wieder relativ schnell abfällt. Bei einem solchen Verlauf der Pedalbetätigung wird in aller Regel Bremsweg verschenkt.

Aus der FR-A-2574355 (entsprechend DE 34 44 827) ist ein Verfahren zum Regeln des Bremsdruckes in einer mit einem elektronisch einstellbaren Bremskraftverstärker ausgerüsteten Fahrzeugbremsanlage, bei dem eine Betätigungsgeschwindigkeit des Bremspedals ermittelt und in Abhängigkeit davon eine Bremskraftverstärkung durchgeführt wird, wobei während einer Bremsung fortlaufend jeweils einer momentanen Betätigungsgeschwindigkeit des Bremspedals ein von der momentanen Betätigungsgeschwindigkeit abhängiger abgespeicherter oder errechneter Soll-Wert des Bremsdruckes zugeordnet wird, und wobei in diesem Moment der Ist-Wert des Bremsdruckes gemessen und mit dem Soll-Wert verglichen wird und in Abhängigkeit von dem Vergleichsergebnis der Soll- und Ist-Werte der Bremskraftverstärker eingestellt wird.

Die Erfindung setzt sich das Ziel, mit einfachen Mitteln bei einer mit einem elektronisch einstellbaren Bremskraftverstärker ausgerüsteten Fahrzeugbremsanlage den Bremskraftverstärker so einzustellen, daß eine möglichst optimale Bremswirkung erzielt wird.

Erfindungsgemäß wird diese Aufgabe dadurch gelöst, daß während einer Bremsung fortlaufend jeweils einer momentanen Betätigungsgeschwindigkeit des Bremspedals ein abgespeicherter Soll-Wert des Bremsdruckes zugeordnet wird, daß in diesem Moment der Ist-Wert des Bremsdruckes gemessen und mit dem Soll-Wert verglichen wird und daß in Abhängigkeit von dem Vergleichsergebnis der Soll- und Ist-Werte der Bremskraftverstärker eingestellt wird.

Anstelle des im Stand der Technik (DE 40 28 290 C1) bekannten Steuerverfahrens lehrt also die vorliegende Erfindung eine **Regelung** des Bremsdruckes, d.h. die Vorgabe eines Soll-Wertes, die Messung eines Ist-Wertes und die Anpassung des Ist-Wertes an den Soll-Wert durch einen entsprechenden Befehl an die Steuerung des Bremskraftverstärkers.

Weiterhin liegt der Erfindung die Erkenntnis zugrunde, daß es nicht erforderlich ist, für eine optimale Einstellung des Bremsdruckes direkt die Eingangskraft am Bremskraftverstärker zu messen, sondern daß ebenfalls gute Ergebnisse in wesentlich einfacherer Weise erzielt werden, wenn die Betätigungsgeschwindigkeit des Bremspedals gemessen wird. Eine solche Messung der Betätigungsgeschwindigkeit des Bremspedals ist in einfacher Weise mit bekannten Drehwinkelsensoren möglich, welche die Drehung des vom Fahrer betätigten Bremspedals um sein Lager messen. Der Drehweg hängt über eine einfache geometrische Beziehung mit dem Betätigungsweg des Pedal zusammen und durch Differentiation des Drehweges in Abhängigkeit von der Zeit läßt sich die Betätigungsgeschwindigkeit des Pedals berechnen.

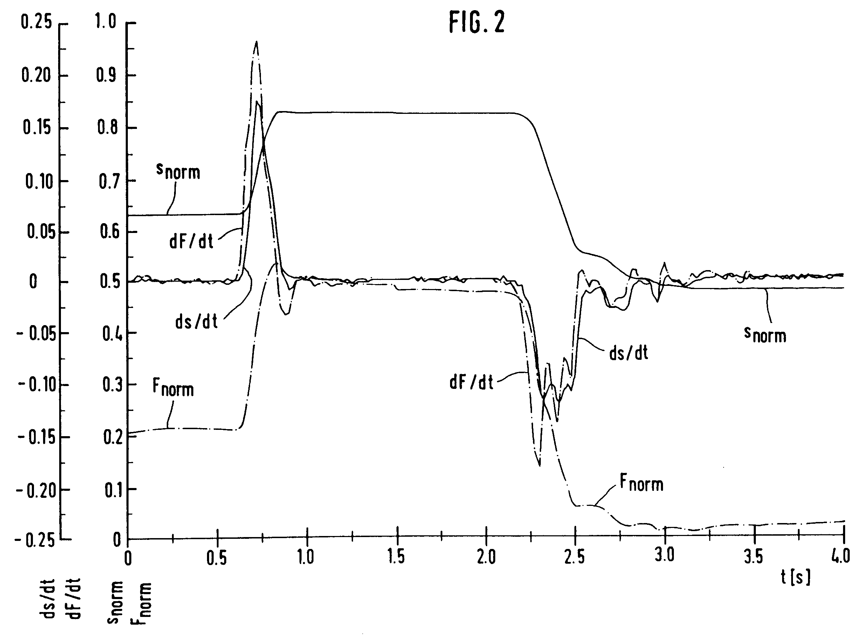

Fig.2 zeigt empirische Ergebnisse für die zeitlichen Verläufe von bei einer Bremsung interessierenden Größen. Über einer gemeinsamen Zeitskala sind hier aufgetragen der normierte Weg sₙₒᵣₘ, die erste Ableitung (Differentiation) der Kraft über der Zeit dF/dt, die erste Ableitung (Differentiation) des Weges über der Zeit ds/dt und der Verlauf der normierten Kraft Fₙₒᵣₘ.

Die Normierung ergibt sich aus den in Fig.2 gezeigten Abszissen, d.h. der Verlauf des Weges sₙₒᵣₘ und der Verlauf der Kraft Fₙₒᵣₘ ist jeweils auf den Wert 1 normiert, wobei die Zeitskala für alle aufgetragenen Größen identisch ist. Fig.2 zeigt das keineswegs selbstverständliche Ergebnis, daß die erste Ableitung der Kraft über der Zeit im wesentlichen gleich ist der ersten Ableitung des Weges über der Zeit. Deshalb kann die erste Ableitung des Weges über der Zeit, also die Betätigungsgeschwindigkeit des Bremspedals, als Grundlage herangezogen werden für eine optimale Steuerung eines Bremskraftverstärkers, bei der die oben erwähnte Verschenkung von Bremsweg nicht mehr auftritt und bei der kein teurer und aufwendiger Sensor für die Eingangskraft am Bremskraftverstärker erforderlich ist.

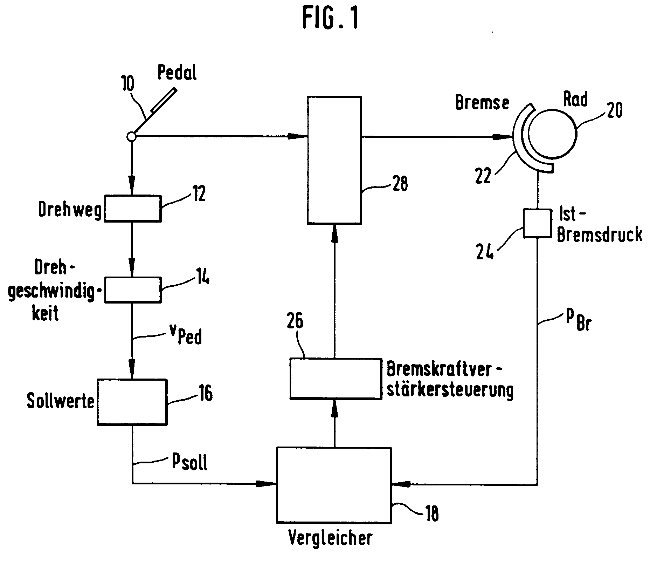

Nachfolgend wird ein Ausführungsbeispiel der Erfindung anhand der Fig.1 näher erläutert. Die Fig.1 zeigt schematisch ein Funktions-Blockdiagramm einer Bremsanlage, mit der das erfindungsgemäße Verfahren zum Regeln des Bremsdruckes durchführbar ist. Die einzelnen Hardware-Elemente der Vorrichtung sind als solches bekannt. Die Erfindung liegt in der besonderen Art der Einstellung der einzelnen Elemente in Abhängigkeit von ermittelten Größen, um insgesamt eine Regelung des Bremsdruckes zu erreichen.

Ein Bremspedal 10 wird vom Fahrer betätigt, d.h. um das Lager 10' gedreht. Mit einem als solchem bekannten Drehwegsensor 12 wird der Drehweg des Pedals gemessen, d.h. der Drehwinkel des Pedals pro Zeiteinheit. Der in Abhängigkeit von der Zeit gemessene Drehweg wird verrechnet um die sogenannte erste Ableitung (Differentiation) des Drehweges über der Zeit zu ermitteln, also die Drehgeschwindigkeit des Pedals 10. Hierzu dient eine Differenziereinrichtung 14. Es versteht sich, daß nicht notwendigerweise für die Realisierung ein gesonderter Differenzierer 14 erforderlich ist, sondern daß dies in bekannter Weise in dem vorhandenen Rechner einer ABS-Anlage durchgeführt werden kann (der auch die Bauteile 14, 16, 18 und 26 realisieren kann).

Die Drehgeschwindigkeit (Winkelgeschwindigkeit) des Bremspedals ist über einen konstanten Faktor mit seiner Betätigungsgeschwindigkeit verknüpft. Es ist deshalb gleichwertig, ob die Bahngeschwindigkeit des Bremspedals oder seine Drehgeschwindigkeit gemessen werden. Eine Messung der Drehgeschwindigkeit ist aber weniger aufwendig.

Nachfolgend wird der Einfachheit halber nur noch von der Betätigungsgeschwindigkeit des Pedals 10 gesprochen, was auch die Drehgeschwindigkeit als bevorzugten Spezialfall mit umfaßt.

Die in der Recheneinheit 14 ermittelte Betätigungsgeschwindigkeit v_{Ped} wird dann weiter verarbeitet, um Signale zur Einstellung eines Bremskraftverstärkers zu gewinnen. Hierzu wird fortlaufend (kontinuierlich) in sehr kleinen Zeitinkrementen jeweils die momentane Betätigungsgeschwindigkeit v_{Ped} des Bremspedals ermittelt und jeder momentanen Betätigungsgeschwindigkeit v_{Ped} wird ein Soll-Wert bezüglich des Bremsdruckes in der Radbremse des zu bremsenden Rades zugeordnet. Das zu bremsende Rad ist in Fig.1 mit dem Bezugszeichen 20 versehen und die Radbremse mit 22.

Die Soll-Werte sind zuvor abgespeichert worden und für die Bremsanlage vorgegeben (was nicht bedeutet, daß sie unabänderlich wären, jedoch sind sie für einen bestimmten Bremsvorgang fest vorgegeben).

In sehr kleinen Zeitinkrementen von z.B. wenigen Millisekunden (2 bis 10 ms) wird also der jeweils geltende Wert der Betätigungsgeschwindigkeit v_{Ped} des Pedals 10 in der oben beschriebenen Weise ermittelt und für jedes dieser Zeitinkremente wird dann dem jeweils momentan gemessenen Wert der Betätigungsgeschwindigkeit v_{Ped} ein Soll-Wert hinsichtlich des Bremsdruckes zugeordnet, der in einem Speicher 16 zuvor für das gegebene Fahrzeug abgespeichert worden ist.

Alternativ kann jedem momentanen Wert der Betätigungsgeschwindigkeit v_{Ped} der Soll-Wert auch durch einen Algorithmus zugeordnet werden, d.h. bei dieser Variante würde das Kästchen 16 in Fig.1 eine Rechenroutine symbolisieren, gemäß der jedem momentanen Wert der Betätigungsgeschwindigkeit v_{Ped} ein Soll-Wert zugeordnet wird. Diese Zuordnung kann in einfacher Weise linear sein, aber auch stärker als linear, z.B. gemäß einer Funktion (Abhängigkeit) des Soll-Wertes vom Wert der Betätigungsgeschwindigkeit v_{Ped}, bei der die Betätigungsgeschwindigkeit v_{Ped} potenziert wird, und zwar mit einem Exponenten größer als 1.

Dies bedeutet, daß fortlaufend für jedes Zeitinkrement aus der Betätigungsgeschwindigkeit v_{Ped} jeweils ein zugeordneter Soll-Wert pₛₒₗₗ festgelegt und in einen Vergleicher 18 eingegeben wird.

In den anderen Eingang des Vergleichers 18 wird ein Ist-Wert p_{Br} des Bremsdruckes eingegeben. Hierzu wird am zu bremsenden Rad 20 (wobei das eine Rad 20 gegebenenfalls für eine Vielzahl von Rädern steht) in der Radbremse 22 der momentan gegebene tatsächliche Bremsdruck gemessen, und zwar mittels eines Drucksensors 24.

Im Vergleicher 18 werden der Soll-Wert pₛₒₗₗ und der Ist-Wert p_{Br} des Bremsdruckes miteinander verglichen und ein vom Vergleichsergebnis abhängiges Signal wird einer Bremskraftverstärkersteuerung 26 zugeführt. Die Bremskraftverstärkersteuerung 26 steuert sodann einen Bremskraftverstärker 28, der in bekannter Weise zwischen dem Pedal 10 und der Bremse 22 angeordnet ist. Die Bremskraftverstärkersteuerung 26 betätigt beispielsweise ein besonderes, elektromagnetisch betätigbares Ventil des Bremskraftverstärkers 28 (vgl. DE 39 43 002 A1) derart, daß, je nach dem Ergebnis des Vergleichs im Vergleicher 18, entweder der vom Bremskraftverstärker 28 erzeugte Hydraulikdruck in der Bremse 22 vergrößert oder reduziert wird. Im einzelnen:

Ergibt der Vergleich zwischen dem Soll-Wert pₛₒₗₗ, der sich aus der Betätigungsgeschwindigkeit des Pedals 10 ergibt, und dem Ist-Wert p_{Br} des Bremsdruckes, der mit dem Sensor 24 gemessen wird, daß der Soll-Wert größer ist als der Ist-Wert, dann erzeugt die Bremskraftverstärkersteuerung 26 ein Signal derart, daß die bremskraftverstärkende Wirkung des Bremskraftverstärkers 28 erhöht wird, bis der Ist-Wert dem Soll-Wert entspricht. Ergibt der Vergleich hingegen, daß der Ist-Wert größer ist als der Soll-Wert, dann erfolgt eine Einstellung des bremskraftverstärkers 28 derart, daß der Bremsdruck geringer verstärkt wird.

Mit dem vorstehend beschriebenen Verfahren und der dieses Verfahren durchführenden Vorrichtung gemäß Fig.1 kann, insbesondere bei sehr plötzlichen und heftigen Bremsungen in Gefahrensituationen, ein günstiger Bremsdruckaufbau an der Radbremse 22 erzielt werden, bei dem in Praxis häufig vorkommende Fehler von Fahrern (die zu einem zu geringen Bremsdruck führen) überwunden werden, und zwar dadurch, daß aufgrund der den einzelnen Betätigungsgeschwindigkeiten des Bremspedals zugeordnete Soll-Werte eine höhere Bremskraftverstärkung mit dem Bremskraftverstärker 28 eingestellt wird als bei einer herkömmlichen Bremsung. Hierdurch beschleunigt sich nicht nur der Bremsdruckaufbau sondern es wird auch ein höheres Bremsdruckniveau erzielt. Ein zu hohes Bremsdruckniveau wird in herkömmlicher Weise durch eine ABS-Anlage vermieden.

## Patentansprüche

1. Verfahren zum Regeln des Bremsdruckes in einer mit einem elektronisch einstellbaren Bremskraftverstärker (28) ausgerüsteten Fahrzeugbremsanlage, bei dem eine Betätigungsgeschwindigkeit des Bremspedals (10) ermittelt und in Abhängigkeit davon eine Bremskraftverstärkung durchgeführt wird, wobei während einer Bremsung fortlaufend jeweils einer momentanen Betätigungsgeschwindigkeit (v_{Ped}) des Bremspedals (10) ein ausschließlich von der momentanen Betätigungsgeschwindigkeit abhängiger abgespeicherter oder errechneter Soll-Wert (pₛₒₗₗ) des Bremsdruckes zugeordnet wird, und wobei in diesem Moment der Ist-Wert (p_{Br}) des Bremsdruckes gemessen und mit dem Soll-Wert verglichen wird und in Abhängigkeit von dem Vergleichsergebnis der Soll- und Ist-Werte der Bremskraftverstärker (28) eingestellt wird.

## Claims

1. A brake pressure control method in a vehicle brake system equipped with an electronically adjustable brake pressure booster (28), with which an actuating speed of the brake pedal (10) is determined and brake pressure boosting effected in response to the same, wherein, during a braking operation, a stored or calculated design or desired value (Pₛₒₗₗ) of the brake pressure that is exclusively responsive to the instantaneous actuating speed constantly is associated with a respective instantaneous actuating speed (v_{Ped}) of the brake pedal (10), and wherein the brake pressure actual value (P_{Br}) is measured at this instant and compared with the design value, and the brake pressure booster (28) is adjusted in response to the result of the comparison between the design and actual values.

## Revendications

1. Dispositif de réglage de la pression de freinage dans une installation de freinage de véhicule équipée d'un amplificateur de freinage (28) réglable électroniquement dans lequel une vitesse d'actionnement de la pédale de frein (10) est détectée et un processus d'amplification du freinage est effectué en fonction de celle-ci, une valeur de consigne (pₛₒₗₗ) de la pression de freinage enregistrée ou calculée dépendant exclusivement de la vitesse d'actionnement instantanée étant constamment attribuée pendant un freinage à chaque vitesse d'actionnement instantanée (v_{ped}) de la pédale de frein (10), et dans lequel à cet instant la valeur effective (p_{Br}) de la pression de freinage est mesurée et est comparée à la valeur de consigne et est réglée en fonction du résultat de la comparaison des valeurs de consigne et effective de l'amplificateur de freinage (28).
